# EUROPEAN PATENT SPECIFICATION

(11) **EP 2 262 385 B1**
(45) Date of publication and mention of the grant of the patent: **15.07.2015**
(21) Application number: 09724719.1
(22) Date of filing: 27.03.2009
(51) Int. Cl.: A23B 7/06, A23L 3/16, A23L 3/30

(54) **METHOD FOR PROCESSING A FOOD PRODUCT**
VERFAHREN FÜR DIE VERARBEITUNG EINES NAHRUNGSMITTELPRODUKTS
PROCÉDÉ PERMETTANT DE TRAITER UN PRODUIT ALIMENTAIRE

(30) Priority: 27.03.2008 DK 200800444
(43) Date of publication of application: 22.12.2010
(73) Proprietor: Force Technology, 2605 Brøndby (DK)
(72) Inventor: KREBS, Niels, DK-2900 Hellerup (DK)
(74) Representative: Zacco Denmark A/S
(86) International application number: PCT/EP2009/053679
(87) International publication number: WO 2009/118414

(56) References cited:
- WO-A-02/078751
- WO-A-2008/003324
- FR-A- 2 811 574
- JP-A- 2 259 303
- US-A1- 2002 040 643
- US-B1- 6 233 844
- GARCIA M L ET AL: "EFFECT OF HEAT AND ULTRASONIC WAVES ON THE SURVIVAL OF TWO STRAINS OF BACILLUS SUBTILIS" 1 December 1989 (1989-12-01), JOURNAL OF APPLIED BACTERIOLOGY, BLACKWELL PUBLISHING LTD., OXFORD, GB, PAGE(S) 619 - 628 , XP000373561 ISSN: 0021-8847 the whole document

## Description

### FIELD OF THE INVENTION

The present invention relates generally to processing of a food product, vegetable, or other biological product of plant or animal origin (forth only denoted food product) by blanching, steaming, and/or boiling a surface layer of the product. More specifically, the invention relates to a method of blanching, steaming, and/or boiling a food product, the method comprising applying steam of a gas to at least a part of a surface area of a food product for a predetermined period of time thereby blanching, steaming, and/or boiling at least a part of said food product.

By steam is to be understood any type of a vaporized liquid, a gas with or without dispersed liquid droplets, and/or any mixture thereof, at an appropriate temperature and pressure.

### BACKGROUND OF THE INVENTION

Raw food products almost inevitably can be counted upon to have spoilage micro-organisms on their surfaces. Furthermore, many types of raw and partly prepared food products may have inherent chemical constituents and physical structures that limit their shelf life time or otherwise spoil other of their chemical and/or physical properties, such as e.g. flavour, colour, appearance, texture, rheological properties and water retaining abilities.

As one example, many vegetables contain inherent enzymatic activities in their surface structures that will promote developments of browning and rancidity and may also interfere with further processing properties of the vegetables. Similarly, raw and even precooked seafood, especially crustaceans such as shrimp and lobster, will be vulnerable to enzymatic browning and also to develop diminished water retaining abilities.

Common methods for a simultaneous combined effect to overcome and correct such conditions and properties are
▪ blanching (a short cooking, affecting mainly the surface region) of vegetables that will destroy micro-organisms and enzymatic activities on the surface and right underneath the surface, thereby preventing, or at least delaying, developments of browning and rancidity,
▪ initial freezing, or a precooking followed by an initial freezing, for crustaceans,
▪ chemical reaction with an acid, an antioxidant, a chelating agent, or with an inhibiting enzyme, and
▪ irradiation with ionising radiation.

These methods and agents often may achieve the immediate purpose when applied as directed and under carefully controlled conditions.

However, such processes may cause undesirable and/or detrimental effects upon the respective food products, e.g. on their flavour, rheology, or water retention abilities. There will also be certain risks of over-processing whereby undesirable features develop, e.g. a soft, cooked appearance, a development of wrinkled or other adverse appearance, or a direct loss of water in the product. Such detrimental effects may cause a loss of sales revenues, may reduce the shelf life of the product in its fresh or frozen state, and/or may negatively affect further processing possibilities.

Such undesirable effects are often tried reduced by keeping the duration of the process as short as possible but this in turn potentially causes risks of under-processing conditions yielding a limited, or a less than desired, main beneficial effect, exactly due to the short application time chosen in order not to obtain negative effects.

Consequently, previous methods often show to be a tight processing balance between obtaining the desired effect and avoiding over-processing.

Furthermore, previous methods may also have some systemic shortcomings that prevent and hinder their use under a number of circumstances, e.g. treatments with acids may be used only for food products where an acid taste is acceptable.

Additionally, in parts of the world some of the previous methods may not even be permitted by the respective food safety agencies, e.g. food irradiation is generally not permitted within the European Union.

Patent specification US 6,233,844 B1 discloses a dehydration method and apparatus for dehydrating a solid product, particularly a food product. The apparatus comprises a hot gas stream device for creating a hot gas stream over the products to be dehydrated and an ultrasonic wave emitting system for directing ultrasound over the products.

The ultrasonic wave emitting system includes a plurality of ultrasonic diffusing plates which are connected to sound wave generators, including a piezoelectric or magnetostrictive element and a mechanical amplifier like a horn, and are in direct contact with the products to be dehydrated. The temperature of the hot gas stream is less than 60° C and is for example approximately 25° C.

The ultrasonic waves cause rapid successive contractions and expansions of the food product where with each contraction a very small amount of water is expelled and evaporated by the hot gas stream.

A general difference between dehydration and food processing like blanching, steaming, and/or boiling is that blanching, steaming, and/or boiling is not aimed at removal of water but rather to preserve and keep steady the water content in a given food product.

Patent specification US 5,113,881 A discloses a device for ultrasonic cleaning and disinfecting of fruit and vegetables, which removes practically all residues of contaminants such as mud, biological dirt, microbiological flora like mold, worms, bacteria, germs, and chemicals such as herbicides, pesticides, fungicides, fertilizer remains, etc. The device stirs fruit and vegetables within a cleaning tank filled with water so as to expose all of their sides to a maximum level of vibration energy. Ultrasonic transducers generate ultrasonic waves in the water and the effect is that small microorganisms are killed and that the solubility of the cleaning agents is improved.

Patent specification JP 2259303 A discloses a food heating ultrasonic wave device with improved efficiency where an acoustic horn having an ultrasonic vibrator, i.e. a mechanical generator, is arranged with a water injecting hollow cone at the extreme end of the horn, a steam nozzle arrangement around it, and a steam feeding pipe at the opposite lower part of the heating chamber. The injected and atomised water particles and the injected steam are mixed with each other and expand by about 100 times to become ultrasonic wave steam. In conjunction with the steam from the feeding pipe control is facilitated and the efficiency is improved. The ultrasonic waves have a relatively low sound pressure level.

Patent application WO 2007/047525 A2 discloses ultrasonic treatment for preparing meat products where the application of ultrasound is to reduce the microbial content of the meat material. One embodiment includes subjecting the meat material to ultrasonic energy of 1 x 10⁻⁴ to 1 kW hour pr liter meat material. Ultrasonic energy is defined as being mechanical vibratory energy that operates at frequencies greater than audible sound.

Patent specification JP 62257365A discloses a treatment of pieces of crushed red fish meat where ultrasonic wave jetting water is added from a jetting nozzle into a vessel holding the fish to stir the crushed pieces of fish meat whereby lipids and water soluble proteins in the fish meat are eluted and liberated.

Patent specification US 2002/0040643 discloses a desiccating device and method providing variable drying conditions allowing the desiccated material to substantially maintain its natural characteristics upon rehydration as well as a low microbial content. The material is subjected to ultrasound and forced flowing hot air or gas in an apparatus with a plurality of drying chambers until the moisture content is reduced to approximately 5 - 10% of its original content. Parameters, e.g. the ultrasonic wavelength, can be varied to control the overall rate of desiccation of the material.

Patent specification FR 2,811,574 discloses a sterilisation process of a product. Ultrasonic vibrations are used to cause stirring or shaking of a substance to be processed. The ultrasonic generators are of a mechanical nature.

The article Gacia M. L. et al. "Effect of heat and ultrasonic waves on the survival of two strains of Bacillus subtilis" discloses an investigation of the effect of heat application and application of ultrasound on two types of bacteria in a liquid. The ultrasonic generator is of a mechanical type but uses induction of cavitation (requiring a liquid) to achieve a large intensity of the ultrasonic waves.

Patent specification EP 1381399 B1 by the same applicant discloses a method of applying steam and ultrasound to the surface of a food product. In this application, the processing time is so short and the frequency and acoustic pressure of a size that the surface of the food product is as unaffected as possible while germs, etc. on the surface of the food product effectively are killed. It is mentioned that the germs (on the surface of the food product) reach a core temperature exceeding 70°C at a time at which the thermal gradient has only penetrated a few micrometers into the surface cells of the product.

WO 2008/003324-A discloses a method of enhancing application of high intensity acoustic waves, wherein the method comprises generating high intensity acoustic waves by a first acoustic wave generator using a gaseous medium where the gaseous medium, after exit from the acoustic wave generator, has a first general direction that is different from a second general direction of the high intensity acoustic waves generated by the first acoustic wave generator. Preferably, the gaseous medium is steam or super-heated steam or super-heated steam mixed with air. Preferably, the acoustic waves have a sound intensity of at least 120 dB. Very efficient transfer of energy to the gaseous medium is thereby ensured; which is usable for disinfection of food items.

Procedures involving mechanical acoustic transducers, like piezoelectric, magnetostrictive, or other mechanical transducers, that apply the generated acoustic waves into a solid item or product generally need to have a complete and unbroken solid connection between the generator and the solid end target in order to avoid a very big efficiency loss associated with the transfer of acoustic waves over a solid/gas interface like an intermediate air gap. This has the disadvantage that direct physical contact need to be maintained to the food product being processed if high power acoustic waves are need to propagate into the target solid. If an air gap is present the acoustic power will fall many magnitudes.

The reason for the big efficiency loss over a solid/gas interface is due to more than four-orders-of-magnitude difference in acoustic impedance for a solid and a gas whereby most of generated acoustic power cannot be emitted (and especially re-emitted) into the gas atmosphere and thus mainly remains in the solid mechanical generator and ultimately is converted into thermal energy.

Such mechanical acoustic transducers are capable of providing high power acoustic waves but that is typically done by so-called cavitation that requires the presence of a liquid where the implosion of acoustic induced bubbles in the liquid can generate high power acoustic waves. However, the generated power of such cavitation processes also cannot readily be transferred to a gas.

### OBJECT AND SUMMARY OF THE INVENTION

It is an object of the invention to provide a method that alleviates at least to an extent one or more of the abovementioned problems.

Another object is to improve the efficiency of a blanching, steaming, and/or boiling process of a surface layer of a food product.

This is achieved by a method of blanching, steaming, and/or boiling a food product, the method comprising applying steam of a gas to at least a part of a surface area of a food product for a predetermined period of time thereby blanching, steaming, and/or boiling at least a part of said food product, and applying airborne high intensity and high power acoustic waves to at least a part of said steam of gas causing the part of said steam of gas to oscillate substantially at the frequency and substantially with the intensity and power of the acoustic waves wherein said high intensity and high power acoustic waves are generated by a high intensity and high power acoustic wave generator and have an acoustic sound pressure level at approximately 10 cm from an orifice of said generator being at least 120 dB, and said predetermined period of time is at least approximately 10 seconds, whereby a heating effect caused by the steam of a gas will penetrate into the food product.

In this way, a blanching, a steaming and/or a boiling effect can be improved by application of a combination of steam of a gas and airborne high intensity and high power acoustic waves where the sonic impact of the acoustic waves increases and enhances the blanching, steaming, and/or boiling effect of the steam. Power is supplied in the form of steam and a steam zone around the product will during use continuously be removed to prevent condensation and insulation whereby the natural microstructures in the surface are not shielded from the steam and do not prevent steam from reaching them.

This entails that the food product (of plant or animal origin) to a larger extent will obtain the desired properties (absence of inherent enzymatic activity, preservation of colour, unchanged/only slightly changed texture and water binding capabilities).

The applied high intensity and high power acoustic waves enhance the heat transfer between the steam and the surface layer of food product(s) being processed by removing or minimizing the so-called laminar sub-layer thereby ensuring that more heat of the steam will be transferred to the food product(s) and ultimately thereby ensuring a faster and/or more efficient processing time for a blanching, steaming, and/or boiling process of the food product(s) being processed. So a more thorough treatment can be achieved in the same time span or even in a somewhat shorter time span.

Furthermore, the heating effect will also penetrate deeper into the food product structure thereby causing a faster enzyme inactivation process.

Additionally, the combination of steam and application of high intensity and high power acoustic waves will achieve efficacies that otherwise only could be achieved by a longer moist heat treatment action, a use of acidic compounds or other chemicals, or of irradiation; but entirely without the side effects of these treatments.

Furthermore, the enhanced efficiency will enable a lower consumption of water and energy and the treatment is harmless to the food product and the environment since only steam is used as an agent. There is no transfer of additional substances to the food product and in turn to the consumer.

The use of airborne high intensity and high power acoustic waves enables a no-contact approach with the food product, thereby potentially speeding the process time up e.g. for food products transported by a conveyor belt or other transport mechanism.

Furthermore, the blanching, steaming, and/or boiling process is also more controllable and shorted overall since the temperature will drop quite fast after steam is not applied anymore.

The present invention does neither involve applying acoustic waves in water or other liquids nor applying acoustic waves from a system being in direct contact with a food product to be processed.

By steam is to be understood any type of a vaporised liquid, a gas with or without dispersed liquid droplets, and/or any mixture thereof, at an appropriate temperature and pressure.

In one embodiment, the predetermined period of time is selected from the group of:
∘ at least approximately 10 seconds,
∘ approximately 10 seconds to approximately 1 minute,
∘ approximately 10 seconds to approximately 5 minutes,
∘ approximately 5 seconds to approximately 5 minutes,

The processing time will typically depend on the type(s) and/or amount of food product(s) being processing.

In one embodiment, the high intensity and high power acoustic waves are ultrasonic acoustic waves. Ultrasonic acoustic waves are less damaging to humans than sonic ones and will often be simpler to dampen and/or reflect. Alternatively, the acoustic waves can have audible or sonic frequencies.

The high intensity and high power acoustic waves may have a main or primary frequency between about 8 kHz and 70 kHz, between about 16 kHz and 50 kHz, or about between 20 kHz and 40 kHz. Alternatively, the main or primary frequency may be different.

In one embodiment, the high intensity and high power acoustic waves are generated by a high intensity and high power acoustic wave generator and have an acoustic sound pressure level (or sound intensity) at approximately 10 cm from the orifice of said generator selected from the group of: at least 130 dB, at least 140 dB, at least 160 dB, approximately 120 to approximately 165 dB, and approximately 120 to approximately 180 dB.

Typically, a sound pressure level of at least 120 dB is sufficient to have an improvement on the steam treatment, where higher pressures, e.g. from 130 dB or from 140 dB, give further improvements.

In one embodiment, the steam is aqueous steam. A relatively small amount of aqueous steam is able to transfer a high amount of heat energy, has only a low cost and leaves only harmless water as its residue.

In one embodiment, the steam and the high intensity and high power acoustic waves are applied by the same device. This enables a more compact design of a treatment device. Furthermore, for some types of devices or generators (e.g. Hartmann, Lavavasseur whistle design types, etc.) the steam is also used to generate the acoustic waves avoiding the need for an additional driving force.

In an alternative embodiment, the steam and the high intensity and high power acoustic waves are generated and applied by different devices. One example is e.g. a device that generates the high intensity and high power acoustic waves using pressurized air or gas or the like and where the steam is supplied separately by one or more steam nozzles from a steam generator. In this way, the steam supply could be limited and/or controlled with greater precision as the steam being supplied then is not responsible also for generating the appropriate sound pressure level of the high intensity and high power acoustic waves.

In one embodiment, the steam is caused to oscillate at such a high acoustic pressure level that the migration of the individual molecules reaches or exceeds the dimensional depth of the laminar sub-layer adjacent to a given food product.

In one embodiment, the surface area of the food product is heated to a temperature of at least about 80 °C (e.g. about 82 - about 85 °C) for about 5 seconds.

The embodiments of the system according to the present invention correspond to the embodiments of the method according to the present invention and have the same advantages for the same reasons. Advantageous embodiments of the system are defined in the sub-claims and described in detail in the following.

### BRIEF DESCRIPTION OF THE DRAWINGS

These and other aspects of the invention will be apparent from and elucidated with reference to the illustrative embodiments shown in the drawings, in which:
Figure 1 schematically illustrates a general embodiment of the present invention;
Figure 2a schematically illustrates a (turbulent) flow over a surface of a food product without application of high intensity and high power acoustic waves;
Figure 2b schematically illustrates a flow over a surface of a food product, where the effect of applying high intensity and high power acoustic waves to/in gas surrounding or contacting the surface is illustrated;
Figure 3a schematically illustrates an embodiment of a device for generating high intensity and high power acoustic waves;
Figure 3b shows an embodiment of a high intensity and high power acoustic wave device in form of a disc-shaped disc jet;
Figure 3c is a sectional view along the diameter of the high intensity and high power acoustic wave device (301) in Figure 3b illustrating the shape of the opening (302), the gas passage (303) and the cavity (304) more clearly;
Figure 3d illustrates an alternative embodiment of a high intensity and high power acoustic wave device, which is shaped as an elongated body;
Figure 3e shows a high intensity and high power acoustic wave device of the same type as in Figure 3d but shaped as a closed curve;
Figure 3f shows a high intensity and high power acoustic wave device of the same type as in Figure 3d but shaped as an open curve; and
Figure 3g illustrates an alternative embodiment of a high intensity and high power acoustic wave device, which is shaped as an elongated body.

### DESCRIPTION OF PREFERRED EMBODIMENTS

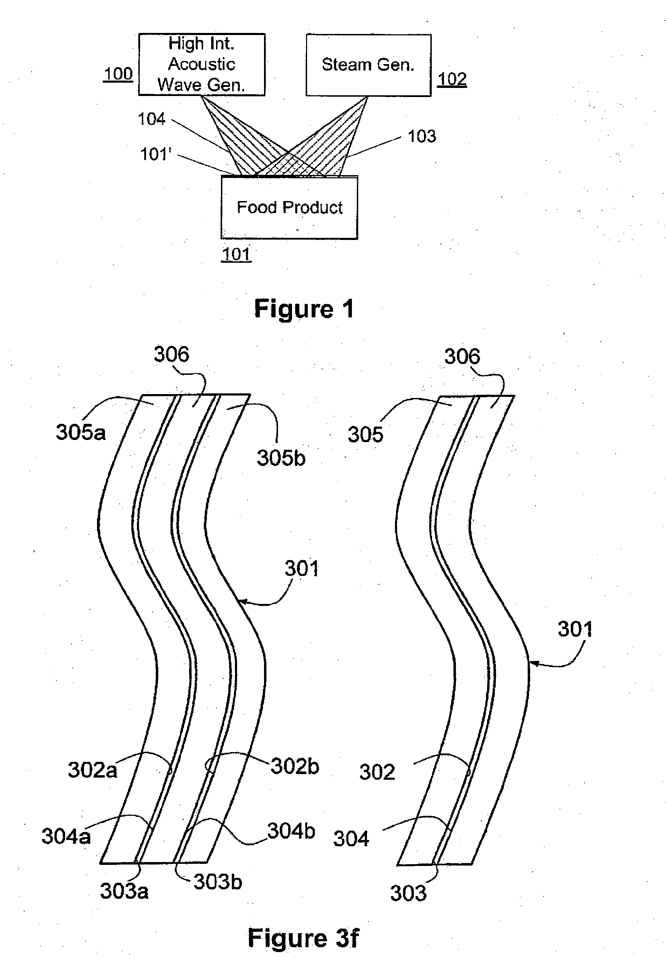

Figure 1 schematically illustrates a general embodiment of the present invention. Schematically illustrated are one or more food products (101) to be blanched, steamed, and/or boiled according to an aspect of the present invention. Also illustrated is a representation of a surface layer (101') of the food product(s) (101) to be treated.

Further illustrated are a high intensity and high power acoustic wave generator (100) and a steam generator (102) generating high intensity and high power acoustic waves (104) and steam (103), respectively.

The generated high intensity and high power acoustic waves (104) and steam (103) - or a gas with or without dispersed liquid droplets, a vaporized liquid, and/or a mixture thereof etc. - are applied, by their respective generators, overlapping in time to the surface (101') of the solid food product(s) (101) to be treated. The acoustic waves (104) and the steam (103) may e.g. be applied overlapping physically in a relevant area of the surface (101') of the food product(s) (101) or generally in such a way that the acoustic waves (104) will influence the steam (103) adjacent to the surface (101') of the food product(s) (100) being treated or before the steam reaches the surface (101'). In this way, a blanching, a steaming and/or a boiling effect of the steam can be improved.

The acoustic waves will cause the steam molecules or steam droplets to oscillate at the frequency and with the intensity and power of the acoustic waves. The steam molecules or steam droplets near the surface (101') of the food product(s) (101) to be treated will vibrate at a high frequency and will minimize or remove the so-called laminar sub-layer present around the solid food product(s) 101) at the surface layer (101'). The reduction of the laminar sub-layer will cause an increased heat transfer and heat transfer rate effected by the steam condensing on the surface layer (101') of the food product(s) (101), as explained in more detail in the following.

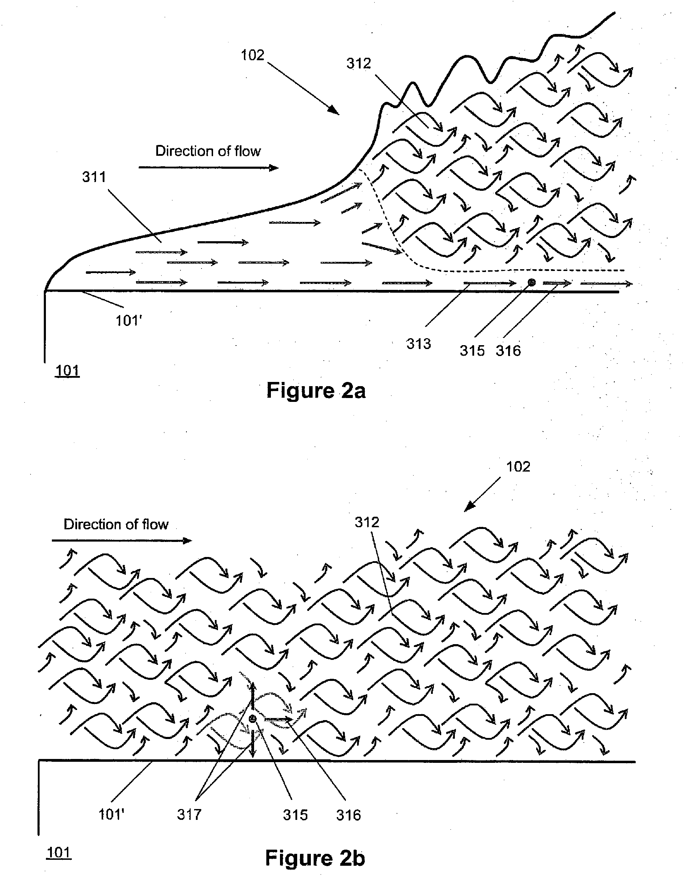

For nearly all practically occurring gas flows around a solid object such as a food product, the flow regime will be turbulent in the entirety of the flow volume; except for a layer covering all surfaces wherein the flow regime is laminar (see e.g. 313 in Figure 2a). This layer is often referred to as the laminar or boundary sub-layer. The thickness of this layer is a decreasing function of the Reynolds number of the flow, i.e. at high flow velocities, the thickness of the laminar sub-layer will decrease.

Decreasing the thickness of the laminar layer will typically enhance the heat transfer significantly.

This will be the case when high intensity and high power acoustic waves are applied to the surface of food product(s). The high intensity and high power acoustic waves increase the interaction between the steam molecules and the surface of the food product(s) and thus the energy exchange at the surface.

Reducing/minimizing the laminar sub-layer provides increased diffusion speed. Additionally, reducing/minimizing the laminar sub-layer improves the probability of collision between steam molecules (102) and surface of the food product(s).

This will be explained in greater detail in connection with Figures 2a and 2b.

Furthermore, the stream of steam will also 'push' away or remove a layer of a steam/air mixture being present around the food product potentially preventing effective heating of the food product by the steam. The steam/air mixture will arise from applied steam ultimately mixing to a small extent with the ambient air.

It is to be understood that one or more acoustic wave generators (100) and/or one or more steam generators (102) may be used. It is also to be understood that acoustic waves and steam may be generated by the same device or by different devices.

Applying the steam and the high intensity and high power acoustic waves by the same device enables a more compact design of a treatment device. Furthermore, for some types of devices or generators (e.g. Hartmann, Lavavasseur whistle design types, etc.) the steam is readily used to generate the acoustic waves avoiding the need for an additional driving force.

Applying the steam and the high intensity and high power acoustic waves by different devices may e.g. be done by a device that generates the high intensity and high power acoustic waves using pressurized air or gas or the like and supplying the steam separately by one or more steam nozzles from a steam generator. In this way, the steam supply could be limited and/or controlled with greater precision as the steam being supplied then is not responsible also for generating the appropriate sound pressure level of the high intensity and high power acoustic waves. For smaller food objects - e.g. shrimp or other crustaceans or peas, etc. it may be important to be able to control the steam supply so they are not easily over-cooked or over-processed.

A blanching process typically involves boiling of a food product for a relatively short period of time in water followed by forced cooling e.g. by dipping or transferring the food product in/to cold water. A blanching process according to the present invention involves the application of steam and acoustic waves as described e.g. at atmospheric pressure for a predetermined amount of time depending on the specific type of food product(s) and a time suitable for obtaining blanched food product(s). Due to the application of the acoustic wave the blanching effect will be obtained fast and in a more controllable way and thereby more gentle than in traditional blanching. The following cooling may e.g. be done by moving the food product out of the treatment zone possibly followed by cooling by vented air. Alternatively, the food product may be immersed into cold water or cold water can be sprayed on the food product or by a similar or alternative cooling process.

A steaming process typically involves the application of steam to heat a food product e.g. in a steaming chamber or the like. A steaming process according to the present invention involves the application of steam and acoustic waves as described e.g. at atmospheric pressure for a predetermined amount of time depending on the specific type of food product(s) and a time suitable for obtaining steamed food product(s).

A boiling process typically involves boiling a food product for a relatively longer (i.e. longer than for blanching) period of time. A boiling process according to the present invention involves the application of steam and acoustic waves as described e.g. at atmospheric pressure for a predetermined amount of time depending on the specific type of food product(s) and a time suitable for obtaining boiled food product(s). The boiling is done using heat from the applied steam.

The period of time a food product is processed by the present invention may e.g. be at least approximately 5 seconds, approximately 5 or approximately 6 seconds to approximately 10 seconds, at least approximately 10 seconds, approximately 10 seconds to approximately 1 minute, approximately 10 seconds to approximately 5 minutes, and approximately 5 seconds to approximately 5 minutes.

In one embodiment, the surface area of the food product is heated to a temperature of at least about 80 °C (e.g. about 82 - about 85 °C) for about 5 seconds.

The processing time will typically depend on the type(s) and/or amount of food product(s) being processing.

In one embodiment, the steam is caused to oscillate at such a high acoustic pressure level that the migration of the individual molecules reaches or exceeds the dimensional depth of the laminar sub-layer adjacent to a given food product. The kinetic energy of all the gas molecules (including steam and other ambient gas) will remove or minimize the laminar sub-layer after which the steam will heat up the surface of the food product(s) in a fast and controllable way by condensing on the surface.

In one embodiment, the applied acoustic waves are ultrasonic. Ultrasonic acoustic waves are less damaging to humans than sonic ones and will often be simpler to dampen and/or reflect. Alternatively, the acoustic waves can have audible or sonic frequencies.

The steam (103) may e.g. be aqueous steam and can be any type of a vaporized liquid, a gas without or with dispersed liquid droplets, and/or any mixture thereof at an appropriate temperature and pressure.

The acoustic wave generator(s) (100) may be of any type capable of delivering a sound pressure level sufficient for enhancing the steam's blanching, steaming, and/or boiling effect. A sufficient sound pressure level has been found to be about 120 dB (at 10 cm from the orifice of the generator) and above. Better results have been found for a sound pressure level being at least 130 dB.

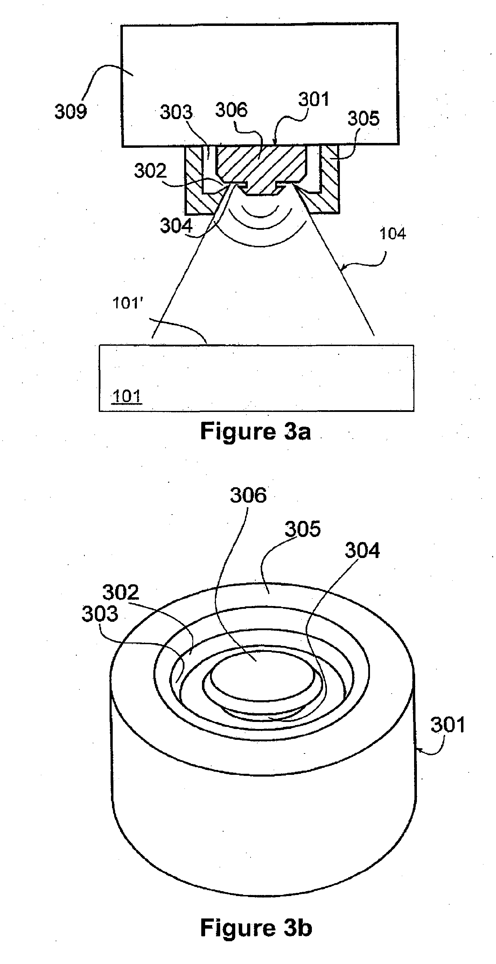

Examples of such generators (100) are e.g. the so-called Hartmann disc, stem, or slot jet type where the steam itself may be used to generate the (ultrasonic) high intensity and high power acoustic waves as e.g. shown and explained in connection with Figures 3a - 3g. Another usable type is the so-called Lavavasseur whistle design type.

The high intensity and high power acoustic wave generator (100) and a steam generator (102) may be moveable in relation to the food product(s) (101) e.g. by moving the generators (100; 102) or by moving the food product(s) (101) past the generators (100; 102); e.g. on a conveyor belt or similar.

One or more acoustic reflectors, .e.g. of generally parabolic or elliptical form, may be used to control the propagation of the acoustic waves.

Figure 2a schematically illustrates a (turbulent) flow over a surface of a food product without application of high intensity and high power ultrasonic acoustic waves.

Schematically shown is a surface (101') of at least one food product (101) with a gas or a mixture of gases comprising steam (102) surrounding and contacting the surface (101'). The surface (101') may also have water droplets on the surface arising from already condensed steam.

Thermal energy can be transported through gas by conduction and also by the movement of the gas from one region to another. This process of heat or energy transfer associated with gas movement is usually referred to as convection. When the gas motion is caused only by buoyancy forces set up by temperature differences, the process is normally referred to as natural or free convection; but if the gas motion is caused by some other mechanism, it is usually referred to as forced convection. With a condition of forced convection there will be a laminar boundary layer (311) near to the surface (101'), even if there is a strong forced convection causing turbulence in the gas near the surface. The thickness of this layer is a decreasing function of the Reynolds number of the flow, so that at high flow velocities, the thickness of the laminar boundary layer (311) will decrease. When the flow becomes turbulent the layer is divided into a turbulent boundary layer (312) and a laminar sub-layer (313). For nearly all practically occurring gas flows, the flow regime will be turbulent in the entirety of the streaming volume, except for the laminar sub-layer (313) covering the surface (101') wherein the flow regime is laminar. Considering a gas molecule (315) in the laminar sub-layer (313), the velocity (316) will be substantially parallel to the surface (101') and equal to the velocity of the laminar sub-layer (313). Heat or energy transport across the laminar sub-layer will be by conduction or radiation, due to the nature of laminar flow.

Furthermore, heat transfer across the laminar sub-layer will primarily be by diffusion. The presence of the laminar sub-layer (313) does not provide optimal or efficient heat transfer.

The principal impediment to the transfer or transmission of heat, energy and/or mass from a gas to a solid surface is the boundary layer (311) of the gas, which adheres to the solid surface. Even when the motion of the gas is fully turbulent, the laminar sub-layer (313) exists and obstructs mass transport and/or heat transfer.

Figure 2b schematically illustrates a flow over a surface of a food product, where the effect of applying high intensity and high power acoustic waves to/in gas surrounding or contacting the surface is illustrated.

More specifically, Figure 2b illustrates the conditions when the surface (101') of a food product (101) is subjected to high intensity and high power (ultrasonic) acoustic waves e.g. supplied by a gas-jet acoustic wave generator (not shown; see e.g. 301 in the other Figures). Considering a gas molecule/particle (315) in the laminar sub-layer, the velocity (316) will be substantially parallel to the surface (101') and equal to the velocity of the laminar sub-layer prior to applying ultrasound. In the direction of the emitted sound field to the surface (101') in Figure 2b, the oscillating velocity of the gas or steam molecule (315) has been increased significantly as indicated by arrows (317). As an example, a maximum velocity of v= 4.5 m/sec and a displacement of +/- 32 µm can be achieved where the frequency is f=22 kHz and the sound pressure level is about 160 dB. The corresponding (vertical) displacement in Figure 2a is substantially 0 since the molecule follows the laminar air stream along the surface. As a result, the acoustic waves will reduce the laminar sub-layer and will cause an increased heat transfer and heat transfer rate effected by the steam condensing on the surface layer (101') of the food product(s) (101).

The sound pressure level is in one embodiment substantially 120 dB or larger or can be 130 dB or larger. In an alternative embodiment, the sound pressure level is substantially 140 dB or larger. In yet another embodiment, the sound pressure level is substantially 160 dB or larger. Furthermore, the sound pressure level may be selected within the range of approximately 140 - 165 or approximately 120 - 165 dB. The sound pressure level may be approximately 120 to approximately 180 dB.

Therefore, the minimization or elimination of the laminar sub-layer has the effect that heat or energy transfer between the surface (101') of a food product (101) and the surrounding or contacting steam (102) is greatly increased, as the reduced size of the laminar sub-layer correspondingly reduces hindrance of heat or energy transfer to the surface of the food product (101). Power is supplied in the form of steam and a steam zone around the product will during use continuously be removed to prevent condensation and insulation whereby the natural microstructures in the surface are not shielded from the steam and do not prevent steam from reaching them. Energy will be supplied to the food product due to the steam condensing on the surface.

This will effectively cause an enhanced reaction between the steam (102) and the food product allowing e.g. for deeper penetration of the heat from the steam and a faster blanching, steaming, and/or boiling of the food product. Figure 3a schematically illustrates a preferred embodiment of a device (301) for generating high intensity and high power acoustic waves. Pressurized gas, here in the form of pressurized steam is passed from a tube or chamber (309) through a passage (303) defined by the outer part (305) and the inner part (306) to an opening (302), from which the gas is discharged in a jet towards a cavity (304) provided in the inner part (306). If the gas pressure is sufficiently high then oscillations are generated in the gas fed to the cavity (304) at a frequency defined by the dimensions of the cavity (304) and the opening (302). The pressure may e.g. be ≥ 1.2 bar or typically 1.2 - 6.0 bar or preferably 3.0 - 5.0 bar. An ultrasound device of the type shown in Figure 3a is able to generate an ultrasonic acoustic pressure level of up to about 160 dB at a gas pressure of about 4 atmospheres. The ultrasound device may e.g. be made from brass, aluminum or stainless steel or in any other sufficiently hard material to withstand the acoustic pressure and temperature to which the device is subjected during use. The method of operation is also illustrated in Figure 3a, in which the generated ultrasound (104) is directed towards a surface (101') of a food product (101) to be treated.

Figure 3b shows an embodiment of a high intensity and high power acoustic wave device in form of a disc-shaped disc jet. Shown is a preferred embodiment of a high intensity and high power ultrasonic acoustic wave generator (301), i.e. a so-called disc jet. The device (301) comprises an annular outer part (305) and a cylindrical inner part (306), in which an annular cavity (304) is recessed. Through an annular gas passage (303) gases - here in the form of steam - may be diffused to the annular opening (302) from which it may be conveyed to the cavity (304). The outer part (305) may be adjustable in relation to the inner part (306), e.g. by providing a thread or another adjusting device (not shown) in the bottom of the outer part (305), which further may comprise fastening means (not shown) for locking the outer part (305) in relation to the inner part (306), when the desired interval there between has been obtained. Such an ultrasound device may generate a frequency of about 22 kHz at a gas pressure of 4 atmospheres. The molecules of the gas are thus able to migrate up to 32 µm about 22,000 times per second at a maximum velocity of 4.5 m/s. These values are merely included to give an idea of the size and proportions of the ultrasound device and by no means limit of the shown embodiment.

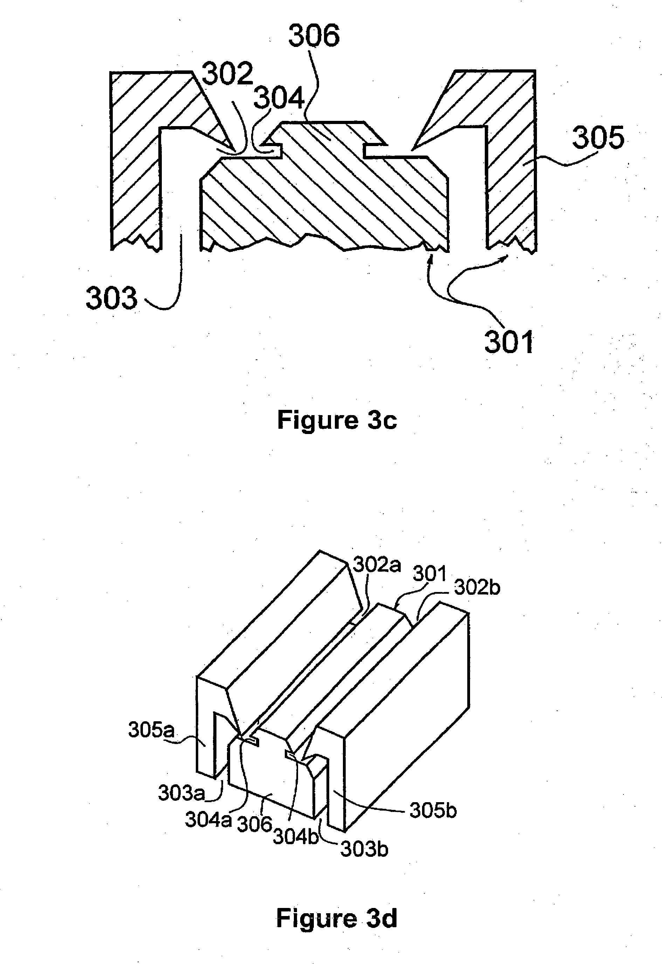

Figure 3c is a sectional view along the diameter of the high intensity and high power acoustic wave device (301) in Figure 3b illustrating the shape of the opening (302), the gas passage (303) and the cavity (304) more clearly. It is further apparent that the opening (302) is annular. The gas passage (303) and the opening (302) are defined by the substantially annular outer part (305) and the cylindrical inner part (306) arranged therein. The gas jet discharged from the opening (302) hits the substantially circumferential cavity (304) formed in the inner part (306), and then exits the ultrasound device (301). As previously mentioned the outer part (305) defines the exterior of the gas passage (303) and is further bevelled at an angle of about 30° along the outer surface of its inner circumference forming the opening of the ultrasound device, wherefrom the gas jet may expand when diffused. Jointly with a corresponding bevelling of about 60° on the inner surface of the inner circumference, the above bevelling forms an acute-angled circumferential edge defining the opening (302) externally. The inner part (306) has a bevelling of about 45° in its outer circumference facing the opening and internally defining the opening (302). The outer part (305) may be adjusted in relation to the inner part (306), whereby the pressure of the gas jet hitting the cavity (304) may be adjusted. The top of the inner part (306), in which the cavity (304) is recessed, is also bevelled at an angle of about 45° to allow the oscillating gas jet to expand at the opening of the ultrasound device.

Figure 3d illustrates an alternative embodiment of a high intensity and high power acoustic wave device, which is shaped as an elongated body. Shown is an ultrasonic high intensity and high power acoustic wave generator comprising an elongated substantially rail-shaped body (301), where the body is functionally equivalent with the embodiments shown in Figures 3a and 3b, respectively. In this embodiment the outer part comprises two separate rail-shaped portions (305a) and (305b), which jointly with the rail-shaped inner part (306) form an ultrasound device (301). Two gas passages (303a) and (303b) are provided between the two portions (305a) and (305b) of the outer part (305) and the inner part (306). Each of said gas passages has an opening (302a), (302b), respectively, conveying emitted gas from the gas passages (303a) and (303b) to two cavities (304a), (304b) provided in the inner part (306). One advantage of this embodiment is that a rail-shaped body is able to coat a far larger surface area than a circular body. Another advantage of this embodiment is that the ultrasound device may be made in an extruding process, whereby the cost of materials is reduced.

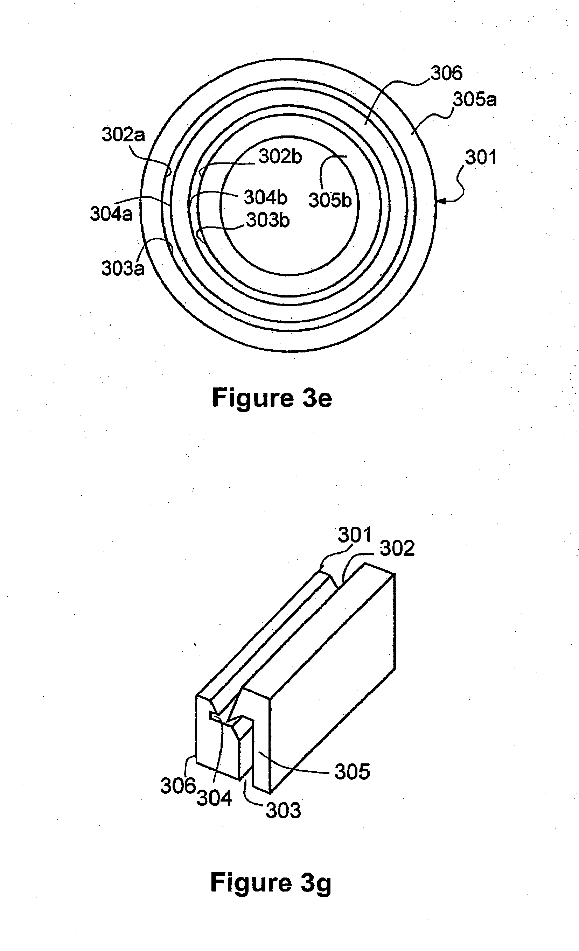

Figure 3e shows a high intensity and high power acoustic wave device of the same type as in Figure 3d but shaped as a closed curve. The embodiment of the gas device shown in Figure 3d does not have to be rectilinear. Figure 3e shows a rail-shaped body (301) shaped as three circular, separate rings. The outer ring defines an outermost part (305a), the middle ring defines the inner part (306) and the inner ring defines an innermost outer part (305b). The three parts of the ultrasound device jointly form a cross section as shown in the embodiment in Figure 3d, wherein two cavities (304a) and (304b) are provided in the inner part, an wherein the space between the outermost outer part (305a) and the inner part (306) defines an outer gas passage (303a) and an outer opening (302a), respectively, and the space between the inner part (306) and the innermost outer part (305b) defines an inner gas passage (304b) and an inner opening (302b), respectively. This embodiment of an ultrasound device is able to coat a very large area at a time and thus treat the surface of large objects.

Figure 3f shows a high intensity and high power acoustic wave device of the same type as in Figure 3d but shaped as an open curve. As shown it is also possible to form an ultrasonic high intensity and high power acoustic wave generator of this type as an open curve. In this embodiment the functional parts correspond to those shown in Figure 3d and other details appear from this portion of the description for which reason reference is made thereto. Likewise it is also possible to form an ultrasonic high intensity and high power acoustic wave generator with only one opening as described in Figure 3b. An ultrasonic high intensity and high power acoustic wave generator shaped as an open curve is applicable where the surfaces of the treated object have unusually shapes. A system is envisaged in which a plurality of ultrasonic high intensity and high power acoustic wave generators shaped as different open curves are arranged in an apparatus according to the invention.

Figure 3g illustrates an alternative embodiment of a high intensity and high power acoustic wave device, which is shaped as an elongated body. This embodiment correspond to the embodiment of Figure 3d but 'cut in half'.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage:

## Claims

1. A method of blanching, steaming, and/or boiling a food product (101), the method comprising:
- applying steam of a gas (103) to at least a part of a surface area (101') of a food product (101) for a predetermined period of time thereby blanching, steaming, and/or boiling at least a part of said food product (101), and
- applying airborne high intensity and high power acoustic waves (104) to at least a part of said steam of gas (103) causing the part of said steam of gas (103) to oscillate substantially at the frequency and substantially with the intensity and power of the acoustic waves (104),
wherein
- said high intensity and high power acoustic waves (104) are generated by a high intensity and high power acoustic wave generator (100; 301) and have an acoustic sound pressure level at approximately 10 cm from an orifice of said generator (100; 301) being at least 120 dB, and
- said predetermined period of time is at least approximately 10 seconds, whereby a heating effect caused by the steam of a gas (103) will penetrate into the food product (101).

2. The method according to claim 1, wherein said predetermined period of time is selected from the group of:
∘ approximately 10 seconds to approximately 1 minute,
∘ approximately 10 seconds to approximately 5 minutes, and
∘ approximately 10 seconds to approximately 5 minutes.

3. The method according to any one of claims 1 - 2, wherein said high intensity and high power acoustic waves are ultrasonic acoustic waves.

4. The method according to any one of claims 1 - 3, wherein said high intensity and high power acoustic waves (104) have an acoustic sound pressure level at approximately 10 cm from an orifice of said generator (100; 301) selected from the group of:
- at least 130 dB,
- at least 140 dB,
- at least 160 dB,
- approximately 120 to approximately 165 dB, and
- approximately 120 to approximately 180 dB.

5. The method according to any one of claims 1 - 4, wherein said steam (103) is aqueous steam.

6. The method according to any one of claims 1 - 5, wherein said steam (103) and high intensity and high power acoustic waves (104) are applied by the same high intensity and high power acoustic wave generator (301).

7. The method according to any one of claims 1 - 5, wherein said steam (103) and said high intensity and high power acoustic waves (104) are generated and applied by different devices (100; 102).

8. The method according to any one of claims 1 - 7, wherein the steam is caused to oscillate at such a high acoustic pressure level that the migration of the individual molecules reaches or exceeds the dimensional depth of the laminar sub-layer adjacent to a given food product.

9. The method according to any one of claims 1 - 8, wherein
- the surface area (101') of the food product (101) is heated to a temperature of at least about 80 °C for about 5 seconds.

## Patentansprüche

1. Verfahren für das Blanchieren, Dämpfen und/oder Kochen eines Nahrungsmittelprodukts (101), wobei das Verfahren umfasst:
- Anwendung von Dampf eines Gases (103) auf zumindest einen Teil eines Oberflächenbereichs (101') eines Nahrungsmittelprodukts (101) für eine vorgegebene Zeitperiode, wodurch zumindest ein Teil des Nahrungsmittelprodukts (101) blanchiert, gedämpft und/oder gekocht wird, und
- Anwendung von Luftschallwellen (104) mit hoher Intensität und hoher Leistung auf zumindest einen Teil des Dampfes von Gas (103), wodurch bewirkt wird, dass der Teil des Dampfes von Gas (103) im Wesentlichen mit der Frequenz und im Wesentlichen mit der Intensität und Leistung der Schallwellen (104) oszilliert,
wobei
- die Schallwellen (104) mit hoher Intensität und hoher Leistung durch einen Schallwellengenerator (100; 301) mit hoher Intensität und hoher Leistung erzeugt werden und in einem Abstand von etwa 10 cm von einer Öffnung des Generators (100; 301) einen Schalldruckpegel von zumindest 120 dB aufweist, und
- die vorgegebene Zeitperiode zumindest etwa 10 Sekunden beträgt, wobei eine durch den Dampf eines Gases (103) verursachte Wärmeleistung in das Nahrungsmittelprodukt (101) eindringen wird.

2. Verfahren nach Anspruch 1, wobei die vorgegebene Zeitperiode ausgewählt ist aus der Gruppe bestehend aus:
- etwa 10 Sekunden bis etwa 1 Minute,
- etwa 10 Sekunden bis etwa 5 Minuten,
- etwa 10 Sekunden bis etwa 5 Minuten,

3. Verfahren nach einem der Ansprüche 1 - 2, wobei die Schallwellen mit hoher Intensität und hoher Leistung Ultraschallwellen sind.

4. Verfahren nach einem der Ansprüche 1 - 3, wobei die Schallwellen (104) mit hoher Intensität und hoher Leistung in einem Abstand von etwa 10 cm von einer Öffnung des Generators (100; 301) einen Schalldruckpegel aufweist, der ausgewählt ist aus der Gruppe bestehend aus:
- zumindest 130 dB,
- zumindest 140 dB,
- zumindest 160 dB,
- etwa 120 bis etwa 165 dB, und
- etwa 120 bis etwa 180 dB.

5. Verfahren nach einem der Ansprüche 1 - 4, wobei der Dampf (103) Wasserdampf ist.

6. Verfahren nach einem der Ansprüche 1 - 5, wobei der Dampf (103) und die Schallwellen (104) mit hoher Intensität und hoher Leistung durch den gleichen Schallwellengenerator (301) mit hoher Intensität und hoher Leistung angewendet werden.

7. Verfahren nach einem der Ansprüche 1 - 5, wobei der Dampf (103) und die Schallwellen (104) mit hoher Intensität und hoher Leistung durch unterschiedliche Vorrichtungen (100; 102) erzeugt werden.

8. Verfahren nach einem der Ansprüche 1 - 7, wobei bewirkt wird, dass der Dampf bei einem derartigen hohen Schalldruckpegel oszilliert, dass die Wanderung der einzelnen Moleküle die dimensionale Tiefe der an ein gegebenes Nahrungsmittelprodukt angrenzenden laminaren Unterschicht erreicht oder überschreitet.

9. Verfahren nach einem der Ansprüche 1 - 8, wobei
- der Oberflächenbereich (101') des Nahrungsmittelprodukts (101) auf eine Temperatur von zumindest 80°C für etwa 5 Sekunden aufgewärmt wird.

## Revendications

1. Procédé de blanchiment, de cuisson à la vapeur, et/ou d'ébullition d'un produit alimentaire (101), le procédé comprenant:
- l'application de la vapeur d'un gaz (103) à au moins une partie d'une zone de surface (101') d'un produit alimentaire (101) pendant une période de temps prédéterminée permettant ainsi le blanchiment, le cuisson à la vapeur, et/ou l'ébullition d'au moins une partie dudit produit alimentaire (101), et
- l'application des ondes acoustiques dans l'air de haute intensité et à haute puissance (104) à au moins une partie de ladite vapeur de gaz (103) provoquant la partie de ladite vapeur de gaz (103) à osciller essentiellement à la fréquence et essentiellement avec l'intensité et la puissance des ondes acoustiques (104),
dans lequel
- lesdites ondes acoustiques de haute intensité et à haute puissance (104) sont générées par un générateur d'ondes acoustiques de haute intensité et à haute puissance (100; 301) et présentent un niveau de pression acoustique à environ 10 cm d'un orifice dudit générateur (100; 301) étant au moins 120 dB, et
- ladite période de temps prédéterminée est au moins environ 10 secondes, un effet thermique provoqué par la vapeur d'un gaz (103) va pénétrer dans le produit alimentaire (101).

2. Procédé selon la revendication 1, dans lequel ladite période de temps prédéterminée est sélectionnée parmi le groupe:
- d'environ 10 secondes à environ 1 minute,
- d'environ 10 secondes à environ 5 minutes,
- d'environ 10 secondes à environ 5 minutes.

3. Procédé selon l'une quelconque des revendications 1 à 2, dans lequel lesdites ondes acoustiques de haute intensité et à haute puissance sont des ondes acoustiques ultra-sonores.

4. Procédé selon l'une quelconque des revendications 1 à 3, dans lequel lesdites ondes acoustiques de haute intensité et à haute puissance (104) présentent un niveau de pression de son acoustique à environ 10 cm à partir d'un orifice dudit générateur (100; 301) choisi parmi le groupe:
- d'au moins 130 dB,
- d'au moins 140 dB,
- d'au moins 160 dB,
- d'environ 120 à environ 165 dB, et
- d'environ 120 à environ 180 dB.

5. Procédé selon l'une quelconque des revendications 1 à 4, dans lequel ladite vapeur (103) est de la vapeur aqueuse.

6. Procédé selon l'une quelconque des revendications 1 à 5, dans lequel ladite vapeur (103) et lesdites ondes acoustiques de haute intensité et à haute puissance (104) sont appliquées par le même générateur des ondes acoustiques de haute intensité et à haute puissance (301).

7. Procédé selon l'une quelconque des revendications 1 à 5, dans lequel ladite vapeur (103) et lesdites ondes acoustiques de haute intensité et à haute puissance (104) sont générées et appliquées par différents dispositifs (100; 102).

8. Procédé selon l'une quelconque des revendications 1 à 7, dans lequel la vapeur est amenée à osciller à un niveau de pression acoustique élevé tel que la migration des molécules individuelles atteint ou dépasse la profondeur dimensionnelle de la sous-couche laminaire adjacent à un produit alimentaire donné.

9. Procédé selon l'une quelconque des revendications 1 à 8, dans lequel
- l'étendue de surface (101') du produit alimentaire (101) est chauffée à une température d'au moins environ 80°C pendant environ 5 secondes.
